# EUROPEAN PATENT SPECIFICATION

(11) **EP 2 653 519 B1**
(45) Date of publication and mention of the grant of the patent: **16.09.2015**
(21) Application number: 10860768.0
(22) Date of filing: 14.12.2010
(51) Int. Cl.: C09K 11/68, C09K 11/87, C09K 11/58

(54) **TUNGSTATE FLUORESCENT MATERIALS AND PREPARATION METHODS THEREOF**
FLUORESZIERENDE WOLFRAMATMATERIALIEN UND HERSTELLUNGSVERFAHREN DAFÜR
MATIÈRES FLUORESCENTES DE TUNGSTATE ET PROCÉDÉS DE PRÉPARATION DE CELLES-CI

(43) Date of publication of application: 23.10.2013
(73) Proprietor: Ocean's King Lighting Science&Technology Co., Ltd., Guangdong 518054 (CN)
(72) Inventor: ZHOU, Mingjie, Shenzhen Guangdong 518054 (CN); LIU, Jun, Shenzhen Guangdong 518054 (CN); MA, Wenbo, Shenzhen Guangdong 518054 (CN)
(74) Representative: Johnson, Richard Alan
(86) International application number: PCT/CN2010/079767
(87) International publication number: WO 2012/079226

(56) References cited:
- US-A- 5 644 193
- US-A- 5 670 839
- US-A1- 2004 212 290
- DOLGOV L ET AL: "Structure and fluorescent properties of TiO2:Sm<3+>-Ag composite", OPTICAL MATERIALS, ELSEVIER SCIENCE PUBLISHERS B.V. AMSTERDAM, NL, vol. 32, no. 11, 16 July 2010 (2010-07-16) , pages 1540-1544, XP027231499, ISSN: 0925-3467 [retrieved on 2010-07-16]
- ARORA S.K. ET AL.: 'Crystallization and Optical Properties of CaW04 and SrW04' CRYSTAL RESEARCH AND TECHNOLOGY vol. 41, no. 11, 2006, pages 1089 - 1095, XP002478231
- MIN Y. L. ET AL.: 'Au@Y203:Eu3+ Rare Earth Oxide Hollow Sub-Microspheres wit Encapsulated Gold Nanoparticles and Their Optical Properties' SOLID STATE SCIENCES vol. 11, no. 1, 2009, pages 96 - 101, XP025840977

## Description

### FIELD OF THE INVENTION

The present invention relates to luminescent materials, more particularly, relates to a modified tungstate fluorescent powders. The present invention also relates to preparation methods of tungstate fluorescent powders.

### BACKGROUND OF THE INVENTION

In recent years, it has been found that WO₄²⁻ can be used as broadband blue light emission group; thus, there is also strong interest in luminescence properties of cathode ray equipped with tungstate, and considerable efforts is being directed toward it. Nowadays, it is widely used in the fields of the photoluminescence, microwave applications, optical fiber, scintillation crystal, humidity sensor, magnetic properties, and catalyst. For example, calcium tungstate is good fluorescent powder used in X-ray intensifying screen. However, WO4²⁻ can be used as broadband blue light emission group, the prominent drawback of it is that the luminous intensity is low. US 5,644,193 A describes a phosphor including transparent spherical particles; US 5,670,839 A describes a laminate of a translucent substrate, a transparent electrode, a first insulating layer, an EL layer, a second insulating later and a metal electrode in that order; US 2004/212290 A1 describes an oxide composite particle compose of at least one fine gold particle contained in a matrix of an oxide particle or at least one fie gold particle supportedly fixed on the surface of an oxide particle; and Dolgov et al., Optical Materials 32 (2010) 1540-1544 describes a composite based on TiO₂ hose doped with Sm³⁺ ions and co-doped with silver nanoparticles.

### SUMMARY OF THE INVENTION

Solving the above problems, the present invention provides tungstate fluorescent powders represented by general formula of RWO₄:xM; wherein, R is one or two metal elements of Ca, Sr and Ba; M is one or two metal nano-particles of Ag, Au, Pt and Pd; x is molar ratio of M nano-particles to RWO₄, x is in the range of 0< x≤1 × 10⁻³.

The other purpose of the present invention is to provide a preparation method of tungstate fluorescent powders, wherein the method comprises the steps of:

Firstly, preparation of M nano-particles collosol
1) weighing and dissolving compound used as source of M in solvent to prepare and dilute solution containing M ions; wherein, M is one or two kinds of metal nano-particles of Ag, Au, Pt and Pd, the compound used as source of M is one or two of silver nitrate, chloroauric acid, chloroplatinic acid and palladium chloride, the solvent is water or mixed solvent of ethanol and water in volume ratio of 1:7~4:1;
2) while magnetically stirring, dissolving assistant agent in said solution containing M ions of 1), and obtaining a mass concentration of assistant agent in the obtained M nano-particles collosol, which is in the range of 1.5×10⁻⁴g/mL~2.1×10⁻³g/mL; wherein, the assistant agent is at least one of polyvinyl pyrrolidone (PVP), sodium citrate, cetyl trimethyl ammonium bromide, sodium dodecyl sulfate and sodium dodecyl sulfonate;
3) weighing and dissolving matters of reducing agent in solvent to prepare a reducing agent solution having a molar concentration in the range of 1×10⁻³molL~1×10⁻²mol/L; the matters of reducing agent is hydrazine hydrate, ascorbic acid or sodium borohydride; the solvent is water or mixed solution of ethanol and water in volume ratio of 1:9~2:1;
4) while magnetically stirring, adding the reducing solution obtained from 3) into the solution obtained from 2) according to the molar ratio of reducing agent to metal ions which is in the range of 1.2:1~4.8:1 to carry out redox reaction for 10~45min, then obtaining M nano-particles collosol;
5) weighing and adding surface treating agent into the M nano-particles collosol prepared in 4), stirring for 3~24h, then obtaining the surface treated M nano-particles collosol, wherein mass concentration of the surface treating agent in M nano-particles collosol is in the range of 0.001 g/mL~0.1g/mL; the surface treating agent is polyvinyl pyrrolidone (PVP).

Secondly, preparation of RWO₄:xM fluorescent powders

As for the preparation of RWO₄:xM fluorescent powders, the two following methods can be employed:

### Method 1: Pechini sol-gel method

6) adding R salts (e.g. R(NO₃)₂) solution and tungstate (e.g. (NH₄)₂WO₄ or (NH₄)₁₀H₂(W₂O₇)₆) solution into a beaker (wherein, the molar ratio of R²⁺ to WO₄²⁻ is in the range of 1:1~1:1.25) according to the general formula RWO₄:xM (wherein, R is one or two metal elements of Ca, Sr and Ba, 0<x≤0.5); then adding ethanol, stirring thoroughly to obtain mixed solution containing R ions and tungstate ions; then adding mixed solution of ethanol and water containing citric acid that acts as a chelating agent, and adding polyethylene glycol (PEG, having relative molecular mass of 2000~20000, preferably 10000, the mass concentration of PEG is in the range of 0.01-0.1 g/ml) that acts as a cross-linking agent according to the volume of solution at that moment; then regulating the pH value of the mixed solution to keep in the range of 2~4 to obtain chelate solution; wherein, citric acid is citric acid monohydrate, molar ratio of the citric acid to total amount of R ions of the mixed solution is in the range of 1:1~6: 1; because a few of tungstate ions are volatilized during the calcination, therefore, the tungstate raw materials should be in excess by 1 mol %~25 mol % when preparing tungstate solution;
7) adding the surface treated M nano-particles collosol of 5) into the chelate solution of 6) according to the molar ratio x (0<x≤1×10⁻³) of M nano-particles to RWO₄ in the general formula of RWO₄:xM; after drying at 80~150°C, the gel is obtained; placing the gel into high temperature furnace, heat treating at 600~900°C for 0.5~7h, cooling to room temperature, after grinding, tungstate flourescent powders represented by general formula of RWO₄:xM is obatained.

### Method 2: hydrothermal method

6') adding tungstate (e.g. (NH₄)₂WO₄ or Na₂WO₄) solution into a beaker according the molar ratio x (0<x≤1×10⁻³) of M nano-particles to RWO₄ in the general formula of RWO₄:xM, then adding the surface treated M nano-particles collosol of 5), stirring for 10min~60min to obtain mixed solution; wherein R is one or two metal elements of Ca, Sr and Ba;
7') dripping R salts (e.g. R(NO₃)₂) solution, whose amount is as much as that of tungstate of 6'), into the mixed solution of 6') to regulate the pH value of mixed solution to keep it in the range of 8~12, stirring for 0.5-4h, then obtaining alkaline mixed solution;
8') transferring alkaline mixed solution of 7') to hydrothermal reactor, keeping the temperature constant at 120~250°C for 12~72h, cooling, taking out and filtrating, rinsing (e.g. rinsing with water, alcohols), drying to obtain powders;
9') placing dry powders in high temperature furnace, heat treating at 500~900°C for 0.5~7h, cooling to room temperature, after grinding, tungstate fluorescent powders represented by general formula of RWO₄: xM is obtained.

Compared to the prior art, the present invention has the following features:
1. The present invention is to dope fluorescent powders with metal particles, improves luminous intensity of fluorescent powders by plasma resonance;
2. The present invention is simple, pollution-free, easy to control, low demand in equipment, beneficial to industry production, can be widely used in the field of producing fluorescent powders.

### BRIEF DESCRIPTION OF THE DRAWINGS

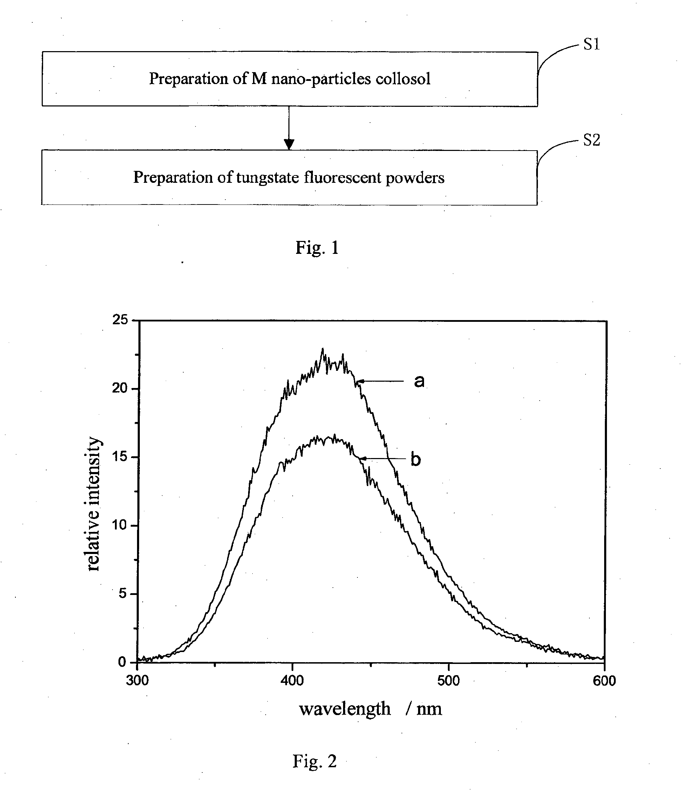

Fig. 1 is a flow chart of the preparation method of tungstate luminescent materials of the present invention;
Fig. 2 is comparison between the spectrums of fluorescent materials prepared in Example 3 excited by cathode ray under 3.0KV acceleration voltage; herein, curve c is emission spectrum of the fluorescent materials CaWO₄:5×10⁻⁵Ag adding metal nano-particles; curve d is emission spectrum of the fluorescent materials CaWO₄ without adding Ag nano-particles;

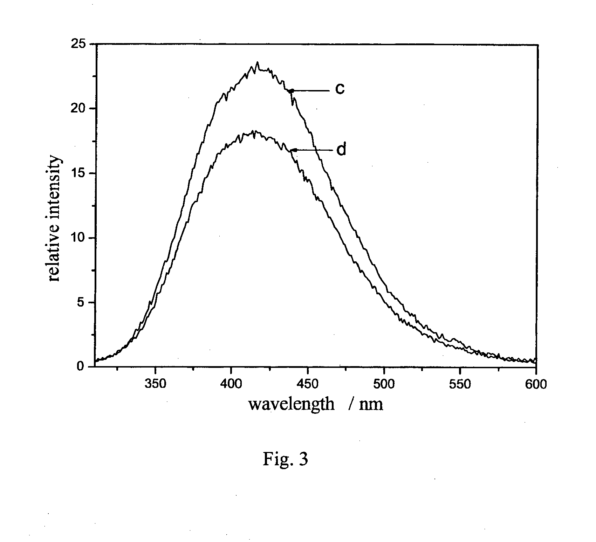

Fig. 3 is comparison between the spectrums of fluorescent materials prepared in Example 6 excited by cathode ray under 7.0KV acceleration voltage; herein, curve c is emission spectrum of the fluorescent materials CaWO₄:5×10⁻⁵ Ag adding metal nano-particles; curve d is emission spectrum of the fluorescent materials CaWO₄ without adding Ag nano-particles.

### DETAILED DESCRIPTION OF ILLUSTRATED EMBODIMENTS

The present invention provides tungstate fluorescent powders represented by general formula of RWO₄:xM; wherein, R is one or two metal elements of Ca, Sr and Ba; M is one or two metal nano-particles of Ag, Au, Pt and Pd; x is molar ratio of M nano-particles to RWO₄, x is in the range of 0<x≤1×10⁻³.

As shown in Fig. 1, the preparation method of the above-mentioned tungstate fluorescent powders comprises:

### Step S1, preparation of M nano-particles collosol

1) weighing and dissolving compound used as source of M in solvent to prepare and dilute solution containing M ions; wherein, M is one or two kinds of metal nano-particles of Ag, Au, Pt and Pd, the compound used as source of M is one or two of silver nitrate, chloroauric acid, chloroplatinic acid and palladium chloride, the solvent is water or mixed solvent of ethanol and water in volume ratio of 1:7~4:1;
2) while magnetically stirring, dissolving assistant agent in said solution containing M ions of 1), and obtaining a mass concentration of assistant agent in the obtained M nano-particles collosol, which is in the range of 1.5×10⁻⁴g/mL~2.1×10⁻³g/mL; wherein, the assistant agent is at least one of polyvinyl pyrrolidone (PVP), sodium citrate, cetyl trimethyl ammonium bromide, sodium dodecyl sulfate and sodium dodecyl sulfonate;
3) weighing and dissolving matters of reducing agent in solvent to prepare a reducing agent solution having a molar concentration of 1×10⁻³mol/L~1×10⁻²mol/L; the matters of reducing agent is hydrazine hydrate, ascorbic acid or sodium borohydride; the solvent is water or mixed solution of ethanol and water in volume ratio of 1:9~2:1;
4) while magnetically stirring, adding the reducing solution obtained from 3) into the solution obtained from 2) according to the molar ratio of reducing agent to metal ions which is in the range of 1.2:1~4.8:1 to carry out redox reaction for 10~45min, then obtaining M nano-particles collosol;
5) weighing and adding surface treating agent into the M nano-particles collosol prepared in 4), stirring for 3~24h, then obtaining the surface treated M nano-particles collosol, wherein mass concentration of the surface treating agent is in the range of 0.001 g/mL~0.1g/mL; the surface treating agent is polyvinyl pyrrolidone (PVP).

### Step S2: preparation of RWO₄:xM fluorescent powders

As for the preparation of RWO₄:xM fluorescent powders, the two following methods can be employed:

### Method 1: Pechini sol-gel method

6) adding R salts (e.g. R(NO₃)₂) solution and tungstate (e.g. (NH₄)₂WO₄ or (NH₄)₁₀H₂(W₂O₇)₆) solution into a beaker (wherein, the molar ratio of R²⁺ to WO₄²⁻ is in the range of 1:1~1:1:25) according to the general formula RWO₄:xM (wherein, R is one or two metal elements of Ca, Sr and Ba, 0<x≤0.5); then adding ethanol, stirring thoroughly to obtain mixed solution of containing R ions and tungstate ions; then adding mixed solution of ethanol and water containing citric acid that acts as a chelating agent, and adding polyethylene glycol (PEG, having relative molecular mass of 2000-20000, preferably 10000, the mass concentration of PEG is in the range of 0.01-0.1 g/ml) that acts as a cross-linking agent according to the volume of solution at that moment; then regulating the pH value of the mixed solution to keep in the range of 2~4 to obtain chelate solution; wherein, citric acid is citric acid monohydrate, molar ratio of the citric acid to total amount of R ions of the mixed solution is in the range of 1:1~6: 1; because a few of tungstate ions are volatilized during the calcination, therefore, the tungstate raw materials should be in excess by 1 mol %~25 mol % when preparing tungstate solution;
7) adding the surface treated M nano-particles collosol of 5) into the chelate solution of 6) according to the molar ratio x (0<x≤1×10⁻³) of M nano-particles to RWO₄ in the general formula of RWO₄:xM; after drying at 80~150°C, the gel is obtained; placing the gel into high temperature furnace, heat treating at 600~900°C for 0.5~7h, cooling to room temperature, after grinding, tungstate flourescent powders represented by general formula of RWO₄:xM is obatained.

### Method 2: hydrothermal method

6') adding tungstate (e.g. (NH₄)₂WO₄ or Na₂WO₄) solution into a beaker according the molar ratio x (0<x≤1×10⁻³) of M nano-particles to RWO₄ in the general formula of RWO₄:xM, then adding the surface treated M nano-particles collosol of 5), stirring for 10min~60min to obtain mixed solution; wherein R is one or two metal elements of Ca, Sr and Ba;
7') dripping R salts (e.g. R(NO₃)₂) solution, whose amount is as much as that of tungstate of 6'), into the mixed solution of 6') to regulate the pH value of mixed solution to keep in the range of 8~12, stirring for 0.5~4h, then obtaining alkaline mixed solution;
8') transferring alkaline mixed solution of 7') to hydrothermal reactor, keeping the temperature constant at 120~250°C for 12~72h, cooling, taking out and filtrating, rinsing (e.g. rinsing with water, alcohols), drying to obtain powders;
9') placing dry powders in high temperature furnace, heat treating at 500~900°C for 0.5~7h, cooling to room temperature, after grinding, tungstate fluorescent powders represented by general formula of RWO₄: xM is obtained.

Further description of the present invention will be illustrated, which combined with preferred embodiments in the drawings.

### Example 1

### Preparation of Pt nano-particles collosol

Weighing and dissolving 5.18mg of chloroplatinic acid (H₂PtCl₆•6H₂O) in 17 mL of deionized water; after chloroplatinic acid dissolved completely, weighing and dissolving 8mg of sodium citrate and 12mg of sodium dodecyl sulfonate in the aqueous solution of chloroplatinic acid under the condition of magnetic stirring; weighing and dissolving 0.38mg of sodium borohydride in mixed solution of 9mL of deionized water and 1mL of ethanol, obtaining 10mL of 1×10⁻³mol/L aqueous solution of sodium borohydride, preparing 10mL of 1×10⁻²mol/L hydrazine hydrate solution at the same time; under the condition of magnetic stirring, adding 0.4mL aqueous solution of sodium borohydride into the aqueous solution of chloroplatinic acid, stirring and reacting for 5min, and then adding 2.6mL of 1×10⁻²mol/L hydrazine hydrate solution into the aqueous solution of chloroplatinic acid, continue to react for 40min, then obtaining 20mL of Pt nano-particles collosol containing 5×10⁻⁴mol/L of Pt; then adding 2.0mg of PVP into Pt nano-particles collosol, magnetically stirring for 12h. The surface-treated Pt nano-particles were obtained.

### Preparation of 0.01mol of CaWO₄:1×10⁻³Pt

Pipetting 10mL of 1mol/L Ca(NO₃)₃ solution, 10.1mL of 1mol/L (NH₄)₂WO₄ solution (excess 1 mol %) and adding into a beaker, then adding 20mL of ethanol, stirring thoroughly to obtain mixed solution of nitrate, adding citric acid of 5mL-water-20mL-ethanol (containing 2.1014g of citric acid monohydrate; the molar ratio of the citric acid to total amount of ions of the mixed solution is 1:1) and 0.65g of PEG (0.01g/ml, PEG having a relative molecular mass of 2000) into the mixed solution, stirring thoroughly, regulating the pH value of reaction solution to about 2; taking 20mL of the above-mentioned treated metal particles solution, heating in a water bath at 60°C while stirring for 16h to obtain collosol; completely drying the collosol at 80°C to obtain gel; placing the gel into high temperature furnace, calcining at 600°C for 7h, cooling to room temperature, fluorescent powders CaWO₄:1×10⁻³Pt were obtained after grinding.

### Example 2

### Preparation of Au nano-particles collosol

Weighing and dissolving 4.12mg of chloroauric acid (AuCl₃•HCl•4H₂O) in mixed solvent of 2.8mL of water and 5.6mL of ethanol; after chloroauric acid dissolved completely, weighing and dissolving 14mg of sodium citrate and 6mg of cetyl trimethyl ammonium bromide in the aqueous solution of chloroauric acid under the condition of magnetic stirring; weighing and dissolving 1.9mg of sodium borohydride and 17.6mg of ascorbic acid in 10mL of deionized water, respectively, obtaining 10mL of 5×10⁻³mol/L aqueous solution of sodium borohydride and 10mL of 1×10⁻²mol/L aqueous solution of ascorbic acid; under the condition of magnetic stirring, adding 0.04mL aqueous solution of sodium borohydride into the aqueous solution of chloroauric acid, stirring and reacting for 5min, and then adding 1.56mL of 1×10⁻²mol/L aqueous solution of ascorbic acid into the aqueous solution of chloroauric acid, continue to react for 30min, then obtaining 10mL of Au nano-particles collosol containing 1×10⁻³mol/L of Au; adding 0.006g of PVP into 6mL of obtained Au nano-particles collosol, and magnetically stirring for 8h. The surface-treated Au nano-particles were obtained.

### Preparation of 0.01mol of SrWO₄:5×10⁻⁴Au

Pipetting 10mL of 1mol/L Sr(NO₃)₃ solution, 12.5mL of 1mol/L (NH₄)₂WO₄ solution (excess 25 mol %) and adding into a beaker, then adding 20mL of ethanol, stirring thoroughly to obtain mixed solution of nitrate, adding citric acid of 5mL-water-20mL-ethanol (containing 4.2028g of citric acid monohydrate; the molar ratio of the citric acid to total amount of ions of the mixed solution is 2:1) and 2.025g of PEG (0.03g/ml, PEG having a relative molecular mass of 6000) into the mixed solution, stirring thoroughly, regulating the pH value of reaction solution to about 3; taking 5mL of the above-mentioned treated metal particles solution, heating in a water bath at 90°C while stirring for 2h to obtain collosol; completely drying the collosol at 150°C to obtain gel; placing the gel into high temperature furnace, calcining at 900°C for 0.5h, cooling to room temperature, fluorescent powders SrWO₄:5×10⁻⁴Au were obtained after grinding.

### Example 3

Preparation of Ag nano-particles collosol: weighing and dissolving 3.40mg of silver nitrate (AgNO₃) in 18.4 mL of deionized water; after silver nitrate dissolved completely, weighing and dissolving 22mg of sodium citrate and 20mg of PVP in the aqueous solution of silver nitrate under the condition of magnetic stirring; weighing and dissolving 5.7mg of sodium borohydride in mixed solvent of 2mL of deionized water and 8mL of ethanol, obtaining 10ml of 1.5×10⁻²mol/L aqueous solution of sodium borohydride; under the condition of magnetic stirring, adding 1.6mL of 1.5×10⁻²mol/L aqueous solution of sodium borohydride into the aqueous solution of silver nitrate at once, continue to react for 10min, then obtaining 20mL of Ag nano-particles collosol containing 1×10⁻³mol/L of Ag; adding 1g of PVP into the Ag nano-particles collosol, and magnetically stirring for 6h. The surface-treated Ag nano-particles were obtained.

### Preparation of 0.01mol of CaWO₄:5×10⁻⁵Ag

Pipetting 5mL of 2mol/L Ca(NO₃)₃ solution, 5.5mL of 2mol/L (NH₄)₂WO₄ solution (excess 10 mol %) and adding into a beaker, then adding 0.5mL of ethanol, stirring thoroughly to obtain mixed solution of nitrate, adding citric acid of 5mL-water-20mL-ethanol (containing 8.4056g of citric acid monohydrate; the molar ratio of the citric acid to total amount of ions of the mixed solution is 4:1) and 3.6g of PEG (0.1g/ml, PEG having a relative molecular mass of 10000) into the mixed solution, stirring thoroughly, regulating the pH value of reaction solution to about 4; taking 0.5mL of the above-mentioned treated metal particles solution, heating in a water bath at 85°C while stirring for 5h to obtain collosol; completely drying the collosol at 120°C to obtain gel; placing the gel into high temperature furnace, calcining at 800°C for 2h, cooling to room temperature, fluorescent powders CaWO₄:5×10⁻⁵Ag were obtained after grinding. Fluorescent powders CaWO₄ were prepared at the same conditions.

Fig. 2 is comparison between the spectrums of fluorescent materials prepared in Example 3 excited by cathode ray under 3.0KV acceleration voltage; herein, curve c is emission spectrum of the fluorescent materials CaWO₄:5×10⁻⁵Ag adding metal nano-particles; curve d is emission spectrum of the fluorescent materials CaWO₄ without adding Ag nano-particles. This figure indicated that such fluorescent powders were blue fluorescent powders; the luminous intensity of samples can be increased by 35% after being doped with metals.

### Example 4

### Preparation of Pd nano-particles collosol

Weighing and dissolving 0.43mg of palladium chloride (PdCl₂•2H₂O) in 8.5 mL of deionized water; after palladium chloride dissolved completely, weighing and dissolving 11.0mg of sodium citrate and 4.0mg of sodium dodecyl sulfate in the aqueous solution of palladium chloride under the condition of magnetic stirring; weighing and dissolving 3.8mg of sodium borohydride in mixed solvent of 7.5mL of deionized water and 2.5mL of ethanol, obtaining 1×10⁻²mol/L reducing aqueous solution of sodium borohydride; under the condition of magnetic stirring, adding rapidly 0.48mL of 1×10⁻²mol/L aqueous solution of sodium borohydride into the aqueous solution of palladium chloride, continue to react for 20min, then obtaining 10mL of Pd nano-particles collosol containing 1×10⁻⁴mol/L of Pd; adding 0.5g of PVP into 10mL of the obtained Pd nano-particles collosol, and magnetically stirring for 4h. The surface-treated Pd nano-particles were obtained.

### Preparation of 0.01mol of BaWO₄:5×10⁻⁵Pd

Pipetting 5mL of 2mol/L Ba(NO₃)₃ solution, 5mL of 0.2mol/L (NH₄)₁₀H₂(W₂O₇)₆ solution (excess 20 mol %) and adding into a beaker, then adding 1mL of ethanol, stirring thoroughly to obtain mixed solution of nitrate, adding citric acid of 5mL-water-20mL-ethanol (containing 12.6084g of citric acid monohydrate; the molar ratio of the citric acid to total amount of ions of the mixed solution is 6:1) and 2.16g of PEG (0.06g/ml, PEG having a relative molecular mass of 20000) into the mixed solution, stirring thoroughly, regulating the pH value of reaction solution to about 3; taking 5mL of the above-mentioned treated metal particles solution, heating in a water bath at 80°C while stirring for 12h to obtain collosol; completely drying the collosol at 120°C to obtain gel; placing the gel into high temperature furnace, calcining at 700°C for 5h, cooling to room temperature, fluorescent powders BaWO₄:5×10⁻⁵Pd were obtained after grinding.

### Example 5

### Preparation of Pt/Au nano-particles collosol

weighing and dissolving 6.2mg of chloroauric acid (AuCl₃•HCl•4H₂O) and 7.8mg of chloroplatinic acid (H₂PtCl₆•6H₂O) in mixed solvent of 14mL and 14mL of ethanol; after dissolved completely, weighing and dissolving 22mg of sodium citrate and 20mg of PVP in the mixed solution under the condition of magnetic stirring; weighing and dissolving 5.7mg of fresh-made sodium borohydride 10mL of deionized water, obtaining 10mL of 1.5×10⁻²mol/L aqueous solution of sodium borohydride; under the condition of magnetic stirring, adding 2mL of 1.5×10⁻²mol/L aqueous solution of sodium borohydride into the mixed solution at once, continue to react for 20min, then obtaining 30mL of Pt/Au nano-particles collosol containing 1×10⁻³mol/L of total metal particles; adding 2g of PVP into Pt/Au nano-particles collosol, and magnetically stirring for 24h. The surface-treated Pt/Au nano-particles were obtained.

### Preparation of 0.01mol of Ca_{0.5}Ba_{0.5}WO₄:1×10⁻⁴Pt/Au

According to the general formula, adding 10mL of 1mL/L (NH₄)₂WO₄ solution into a beaker, then adding 1 mL of the above-mentioned treated metal particles solution, stirring for 10min; then dripping mixed solution of 5mL of 1ml/L Ca(NO₃)₂ and 5mL of 1ml/L Ba(NO₃)₂ into the above solution, regulating pH to 8, stirring for 0.5h; transferring the solution to hydrothermal reactor, then keeping the temperature constant at 120°C for 72, after that, cooling, taking out and filtrating, rinsing with water and alcohols, drying; at last, placing the dry products into high temperature furnace, calcining at 500°C for 7h, cooling to room temperature, tungstate fluorescent powders Ca_{0.5}Ba_{0.5}WO₄:1×10⁻⁴Pt/Au were obtained after grinding.

### Example 6

### Preparation of Ag nano-particles collosol

weighing and dissolving 3.40mg of silver nitrate (AgNO₃) in 18.4 mL of deionized water; after silver nitrate dissolved completely, weighing and dissolving 22mg of sodium citrate and 20mg of PVP in the aqueous solution of silver nitrate under the condition of magnetic stirring; weighing and dissolving 5.7mg of sodium borohydride in 10mL of deionized water, obtaining 10mL of 1.5×10⁻²mol/L aqueous solution of sodium borohydride; under the condition of magnetic stirring, adding 1.6mL of 1.5×10⁻²mol/L aqueous solution of sodium borohydride into the aqueous solution of silver nitrate at once, continue to react for 10min, then obtaining 20mL of Ag nano-particles collosol containing 1×10⁻³mol/L of Ag; adding 1g of PVP into Ag nano-particles collosol, and magnetically stirring for 3h. The surface-treated Ag nano-particles were obtained.

### Preparation of 0.01mol of CaWO₄:5×10⁻⁵Ag

According to the general formula, adding 10mL of 1mL/L Na₂WO₄ solution into a beaker, then adding 0.5 mL of the above-mentioned treated metal particles solution, stirring for 60min; then dripping 10mL of 1ml/L Ca(NO₃)₂ solution into the above solution, regulating pH to 10, stirring for 4h; transferring the solution to hydrothermal reactor, then keeping the temperature constant at 200°C for 72, after that, cooling, taking out and filtrating, rinsing with water and alcohols, drying; at last, placing the dry products into high temperature furnace, calcining at 600°C for 3h, cooling to room temperature, tungstate fluorescent powders CaWO₄:5×10⁻⁵Ag were obtained after grinding. Tungstate fluorescent powders CaWO₄ were prepared at the same conditions.

Fig. 3 is comparison between the spectrums of fluorescent materials prepared in Example 6 excited by cathode ray under 7.0KV acceleration voltage; herein, curve c is emission spectrum of the fluorescent materials CaWO₄:5×10⁻⁵Ag adding metal nano-particles; curve d is emission spectrum of the fluorescent materials CaWO₄ without adding Ag nano-particles. This figure indicated that such fluorescent powders were blue fluorescent powders; the luminous intensity of samples can be increased by 28% after being doped with metals.

### Example 7

### Preparation of Ag nano-particles collosol

weighing and dissolving 3.40mg of silver nitrate (AgNO₃) in mixed solvent of 2.3 mL of ethanol and 16.1mL of water; after silver nitrate dissolved completely, weighing and dissolving 22mg of sodium citrate and 20mg of PVP in the aqueous solution of silver nitrate under the condition of magnetic stirring; weighing and dissolving 5.7mg of sodium borohydride in mixed solvent of 5mL of deionized water and 5mL of ethonal, obtaining 10mL of 1.5×10⁻²mol/L aqueous solution of sodium borohydride; under the condition of magnetic stirring, adding 1.6mL of 1.5×10⁻²mol/L aqueous solution of sodium borohydride into the aqueous solution of silver nitrate at once, continue to react for 10min, then obtaining 20mL of Ag nano-particles collosol containing 1×10⁻³mol/L of Ag; adding 0.5g of PVP into Ag nano-particles collosol, and magnetically stirring for 6h. The surface-treated Ag nano-particles were obtained.

### Preparation of 0.01mol of BaWO₄:1×10⁻⁴Ag

According to the general formula, adding 10mL of 1mL/L Na₂WO₄ solution into a beaker, then adding 1 mL of the above-mentioned treated metal particles solution, stirring for 30min; then dripping 10mL of 1ml/L Ba(NO₃)₂ solution into the above solution, regulating pH to 12, stirring for 1h; transferring the solution to hydrothermal reactor, then keeping the temperature constant at 250°C for 12, after that, cooling, taking out and filtrating, rinsing with water and alcohols, drying; at last, placing the dry products into high temperature furnace, calcining at 900°C for 0.5h, cooling to room temperature, tungstate fluorescent powders BaWO₄:1×10⁻⁴Ag were obtained after grinding.

While the present invention has been described with reference to particular embodiments, it will be understood that the embodiments are illustrative and that the invention scope is not so limited. Accordingly, the scope of the present invention is described by the appended claims and is supported by the foregoing description.

## Claims

1. Tungstate fluorescent powders represented by general formula of RWO₄:xM;
wherein, R is one or two of Ca, Sr and Ba metal elements; M is one or two of Ag, Au, Pt and Pd nano-particles; x is molar ratio of M nano-particles to RWO₄, x is in the range of 0<x≤1×10⁻³.

2. A preparation method of tungstate fluorescent powders, wherein the method comprises the steps of:
step S11, adding surface treating agent into M nano-particles collosol, stirring for 3-24h to carry out surface treatment to achieve surface treated M nano-particles collosol; wherein, M is one or two of Ag, Au, Pt and Pd nano-particles;
step S12, mixing R salts with tungstate solution according to the composition stoichiometry of R and W elements in the general formula RWO₄, then adding ethanol, stirring, adding solution of ethanol and water containing citric acid; then adding polyethylene glycol and maintaining the pH value to be in the range of 2-4, obtaining chelate solution; wherein, R is one or two of Ca, Sr and Ba metal elements;
step S13, according to the stoichiometry of M nano-particles and RWO₄ in the general formula RWO₄:xM, adding the surface treated M nano-particles collosol which is obtained from step S11 into the chelate solution obtained from step S12, heating in water-bath, stirring to achieve collosol; x is in the range of 0<x≤0.5;
step S14, cooling and grinding the collosol obtained from step S13 after sequential drying treatment and heat treatment to achieve tungstate fluorescent represented by general formula of RWO₄:xM.

3. The preparation method of tungstate fluorescent powders according to claim 2, wherein, in said step S11, said surface treating agent is polyvinyl pyrrolidone, the mass concentration of said surface treating agent in M nano-particles collosol is in the range of 0.001g/mL to 0.1g/mL.

4. The preparation method of tungstate fluorescent powders according to claim 2, wherein, in said step S11, said M nano-particles are produced as follows:
step S111, dissolving compound used as source of M in water solvent or mixed solution of ethanol and water in volume ratio of 1:7~4:1 to achieve solution containing M ions;
step S112, adding successively assistant agent and reducing agent solution into the solution containing M ions obtained from step S111 to carry out redox reaction for 10~45min, then obtaining M nano-particles collosol; said assistant agent is at least one of polyvinyl pyrrolidone, sodium citrate, cetyl trimethyl ammonium bromide, sodium dodecyl sulfate and sodium dodecyl sulfonate.

5. The preparation method of tungstate fluorescent powders according to claim 4, wherein, in said step S 112:
molar concentration of said assistant agent in M nano-particles collosol is in the range of 1 ×10⁻⁵mol/L~2.1×10⁻³mol/L;
molar concentration of said reducing agent solution is in the range of 1×10⁻³mol/L~1×10⁻²mol/L, reducing agent in reducing agent solution is at least one of hydrazine hydrate, ascorbic acid and sodium borohydride, solvent of said reducing agent solution is mixed solvent of water and ethanol; molar ratio of said reducing agent to M ions is in the range of 1.2:1~4.8:1.

6. The preparation method of tungstate fluorescent powders according to claim 2, wherein, in said step S12:
in said tungstate solution, tungstate is excess by 1mol%-25mol%;
said citric acid is citric acid monohydrate, the molar ratio of said citric acid to total amount of R ions of the mixed solution is in the range of 1:1~6: 1;
molecular weight of said polyethylene glycol is in the range of 2000-20000; mass concentration of said polyethylene glycol in mixed solution is in the range of 0.01~0.1g/mL.

## Patentansprüche

1. Fluoreszierendes Wolframat-Pulver, dargestellt durch die allgemeine Formel RWO₄:xM;
worin R ein oder zwei Metallelemente aus Ca, Sr und Ba ist; M ein oder zwei Nanopartikel aus Ag, Au, Pt und Pd ist; x das Molverhältnis von M-Nanopartikeln zu RWO₄ ist und x im Bereich von 0 < x ≤ 1 x 10⁻³ liegt.

2. Herstellungsverfahren von fluoreszierenden Wolframat-Pulvern, worin das Verfahren die folgenden Schritte umfasst:
Schritt S11, Zusetzen eines Oberflächenbehandlungsmittels in M-Nanopartikel-Collosol, Rühren 3-24 h lang, um eine Oberflächenbehandlung durchzuführen und oberflächenbehandeltes M-Nanopartikel-Collosol zu erhalten; worin M ein oder zwei Nanopartikel aus Ag, Au, Pt und Pd ist;
Schritt S12, Mischen von R-Salzen mit Wolframatlösung entsprechend der stöchiometrischen Zusammensetzung von R- und W-Elementen in der allgemeinen Formel RWO₄, dann Zusetzen von Ethanol, Rühren, Zusetzen einer citronensäurehaltigen Lösung aus Ethanol und Wasser; dann Zusetzen von Polyethylenglykol und Beibehaltung eines pH-Werts im Bereich von 2-4, Erhalten einer Chelatlösung; worin R ein oder zwei Metallelemente aus Ca, Sr und Ba ist; Schritt S13, entsprechend der Stöchiometrie von M-Nanopartikeln und RWO₄ in der allgemeinen Formel RWO₄:xM Zusetzen des oberflächenbehandelten M-Nanopartikel-Collosols, das durch Schritt S11 erhalten wurde, in die Chelatlösung, die durch Schritt S12 erhalten wurde, Erhitzen im Wasserbad, Rühren, um Collosol zu erhalten; x liegt im Bereich von 0 < x ≤ 0,5;
Schritt S14, Kühlen und Mahlen des durch Schritt S13 erhaltenen Collosols nach einer sequenziellen Trocknungsbehandlung und Hitzebehandlung, um ein fluoreszierendes Wolframat zu erreichen, dargestellt durch die allgemeine Formel RWO₄:xM.

3. Herstellungsverfahren von fluoreszierenden Wolframat-Pulvern nach Anspruch 2, worin das Oberflächenbehandlungsmittel in Schritt S11 Polyvinylpyrrolidon ist und die Massenkonzentration des Oberflächenbehandlungsmittels im M-Nanopartikel-Collosol im Bereich von 0,001 g/ml bis 0,1 g/ml liegt.

4. Herstellungsverfahren von fluoreszierenden Wolframat-Pulvern nach Anspruch 2, worin die M-Nanopartikel in Schritt S11 wie folgt hergestellt werden:
Schritt S111, Auflösen der als Quelle von M verwendeten Verbindung in Wasser als Lösungsmittel oder einer gemischten Lösung aus Ethanol und Wasser im Volumenverhältnis von 1:7-4:1, um eine M-Ionen enthaltende Lösung zu erhalten;
Schritt S112, sukzessives Zusetzen eines Hilfsmittels und einer Reduktionsmittellösung in die durch Schritt S111 erhaltene Lösung, die M-Ionen enthält, um 10-45 min lang eine Redoxreaktion durchzuführen, und dann Erhalten des M-Nanopartikel-Collosols; das Hilfsmittel ist zumindest eines aus Polyvinylpyrrolidon, Natriumcitrat, Cetyltrimethylammoniumbromid, Natriumdodecylsulfat und Natriumdodecylsulfonat.

5. Herstellungsverfahren von fluoreszierenden Wolframat-Pulvern nach Anspruch 4, worin in Schritt S112:
die Molkonzentration des Hilfsmittels im M-Nanopartikel-Collosol im Bereich von 1 × 10⁻⁵ mol/l - 2,1 × 10⁻³ mol/l liegt;
die Molkonzentration der Reduktionsmittellösung im Bereich von 1 x 10⁻³ mol/l - 1 × 10⁻² mol/l liegt; das Reduktionsmittel in der Reduktionsmittellösung zumindest eines aus Hydrazinhydrat, Ascorbinsäure und Natriumborhydrid ist, das Lösungsmittel der Reduktionsmittellösung ein gemischtes Lösungsmittel aus Wasser und Ethanol ist; das Molverhältnis des Reduktionsmittels zu den M-Ionen im Bereich von 1,2:1-4,8:1 liegt.

6. Herstellungsverfahren von fluoreszierenden Wolframat-Pulvern nach Anspruch 2, worin in Schritt S12
das Wolframat in der Wolframatlösung einen Überschuss von 1 Mol-% bis 25 Mol-% aufweist;
die Citronensäure Citronensäure-Monohydrat ist, das Molverhältnis der Citronensäure zur Gesamtmenge von R-Ionen in der gemischten Lösung im Bereich von 1:1-6:1 liegt;
das Molekulargewicht des Polyethylenglykol im Bereich von 2000-20000 liegt; die Massenkonzentration des Polyethylenglykol in der gemischten Lösung im Bereich von 0,01-0,1 g/ml liegt.

## Revendications

1. Poudres de tungstate fluorescent représenté par la formule générale RWO₄:xM ;
où, R est un ou deux des éléments métalliques Ca, Sr et Ba ; M est un ou deux de nanoparticules de Ag, Au, Pt et Pd ; x est le rapport molaire de nanoparticules de M à RWO₄, x est dans la plage de 0 < x ≤ 1x10⁻³.

2. Procédé de préparation de poudres de tungstate fluorescent, le procédé comprenant les étapes de :
étape S11, ajout d'agent de traitement de surface dans un collosol de nanoparticules de M, agitation pendant 3 à 24 h pour effectuer un traitement de surface pour obtenir un collosol de nanoparticules de M traitées ; où M est un ou deux de nanoparticules de Ag, Au, Pt et Pd ;
étape S12, mélange de sels de R sels avec une solution de tungstate selon la stoechiométrie de composition des éléments R et W dans la formule générale RWO₄, puis ajout d'éthanol, agitation, ajout d'une solution d'éthanol et d'eau contenant de l'acide citrique ; puis ajout de polyéthylène glycol et maintien de la valeur de pH dans la plage de 2 à 4, obtention d'une solution de chélate ; où, R est un ou deux des éléments métalliques Ca, Sr et Ba ;
étape S13, selon la stoechiométrie de nanoparticules de M et RWO₄ dans la formule générale RWO₄:xM, ajout du collosol de nanoparticules de M traitées en surface qui est obtenu à partir de l'étape S11 dans la solution de chélate obtenue à partir de l'étape S12, chauffage dans un bain-marie, agitation pour obtenir un collosol ; x est dans la plage de 0 < x ≤ 0,5 ;
étape S14, refroidissement et broyage du collosol obtenu de l'étape S13 après traitement de séchage séquentiel et traitement thermique pour obtenir un tungstate fluorescent représenté par la formule générale RWO₄:xM.

3. Procédé de préparation de poudres de tungstate fluorescent selon la revendication 2, dans lequel, dans ladite étape S11, ledit agent de traitement de surface est la polyvinylpyrrolidone, la concentration en masse dudit agent de traitement de surface dans le collosol de nanoparticules de M est dans la plage de 0,001 g/ml à 0,1 g/ml.

4. Procédé de préparation de poudres de tungstate fluorescent selon la revendication 2, dans lequel, dans ladite étape S11, lesdites nanoparticules de M sont produites comme suit :
étape S111, dissolution du composé utilisé en tant que source de M dans un solvant aqueux ou une solution mixte d'éthanol et d'eau dans un rapport de volume de 1:7 à 4:1 pour obtenir une solution contenant des ions M ;
étape S112, ajout successif d'une solution d'agent adjuvant et d'agent réducteur dans la solution contenant les ions M obtenue dans l'étape S111 pour conduire une réaction redox pendant 10 à 45 min, puis obtention d'un collosol de nanoparticules de M ; ledit agent adjuvant étant au moins l'un parmi la polyvinylpyrrolidone, le citrate de sodium, le bromure de cétyltriméthylammonium, le dodécylsulfate de sodium et le dodécylsulfonate de sodium.

5. Procédé de préparation de poudres de tungstate fluorescent selon la revendication 4, dans lequel, dans ladite étape S112 :
la concentration molaire dudit agent adjuvant dans le collosol de nanoparticules de M est dans la plage de 1 x 10⁻⁵ mol/l à 2, 1 x 10⁻³ mol/l ;
la concentration molaire de ladite solution d'agent réducteur est dans la plage de 1 x 10⁻³ mol/l à 1 x 10⁻² mol/l, d'agent réducteur dans la solution d'agent réducteur est au moins l'un de l'hydrate d'hydrazine, l'acide ascorbique et le borohydrure de sodium, le solvant de ladite solution d'agent réducteur est un solvant mixte d'eau et d'éthanol ; le rapport molaire dudit agent réducteur aux ions M est dans la plage de 1,2:1 à 4,8:1.

6. Procédé de préparation de poudres de tungstate fluorescent selon la revendication 2, dans lequel, dans ladite étape S12 :
dans ladite solution de tungstate, le tungstate est en excès de 1 % en moles à 25 % en moles ;
ledit acide citrique est l'acide citrique monohydraté, le rapport molaire dudit acide citrique à la quantité totale d'ions R de la solution mixte est dans la plage de 1:1 à 6:1 ;
le poids moléculaire dudit polyéthylène glycol est dans la plage de 2000 à 20000 ; la concentration en masse dudit polyéthylène glycol dans la solution mixte est dans la plage de 0,01 à 0,1 g/ml.
